Europäisches Patentamt

European Patent Office

Office européen des brevets

(19)

(11) Veröffentlichungsnummer: **0 162 355**
**B1**

(12) **EUROPÄISCHE PATENTSCHRIFT**

(45) Veröffentlichungstag der Patentschrift:
16.08.89

(51) Int. Cl.⁴: **F 16 F 13/00, B 60 K 5/12**

(21) Anmeldenummer: 85105394.2

(22) Anmeldetag: 03.05.85

(54) **Motorlager, insbesondere Hydrolager.**

(30) Priorität: **22.05.84 DE 3419060**

(43) Veröffentlichungstag der Anmeldung:
**27.11.85 Patentblatt 85/48**

(45) Bekanntmachung des Hinweises auf die Patenterteilung:
**16.08.89 Patentblatt 89/33**

(84) Benannte Vertragsstaaten:
**DE FR GB IT SE**

(56) Entgegenhaltungen:
DE-A- 2 328 647
DE-A- 3 214 997

PATENT ABSTRACTS OF JAPAN, Band 7, Nr. 133
(M-221)[1278], 10. Juni 1983; & JP - A - 58 49516
(TOYOTA JIDOSHA KOGYO K.K.) 23.03.1983
PATENT ABSTRACTS OF JAPAN, Band 7, Nr. 207
(M-242)[1352], 13. September 1983; & JP - A - 58 105 825
(NISSAN JIDOSHA K.K.) 23.06.1983

(73) Patentinhaber: **Sciortino, Giacomo, Dipl.-Ing.,
Schröderstrasse 1, D-6900 Heidelberg (DE)**

(72) Erfinder: **Andrä, Rainer, Dr., Dehrnerstrasse 10,
D-6250 Limburg (DE)**
Erfinder: **Sciortino, Giacomo, Schröderstrasse 1,
D-6900 Heidelberg (DE)**

(74) Vertreter: **Weissenfeld-Richters, Helga, Dr.,
Höhnerweg 2, D-6940 Weinheim/Bergstrasse (DE)**

## Beschreibung

Die Erfindung betrifft ein zwischen einem Motortragteil und einer Karosserie eines Kraftfahrzeuges angebrachtes Motorlager, insbesondere Hydrolager, bei dem eine erste Wärmebrücke das Motorlager mit der Karosserie und/oder eine zweite Wärmebrücke den motorseitigen Teil des Motorlagers mit der Karosserie verbindet.

Ein solches Motorlager ist aus der DE-A 3 214 997 bekannt. Die motorseitig erzeugte Wärme wird dabei direkt in das Motortragteil ein- und durch das Innere des Motorlagers hindurch abgeleitet. Hierbei müssen in dem Motorlager Innentemperaturen von etwa 160°C in Kauf genommen werden. Diese hängen im wesentlichen von der Betriebstemperatur des zugehörigen Motors ab sowie von der jeweiligen Umgebungstemperatur.

Über die Temperaturabhängigkeit der Stoffeigenschaften der Materialien, welchen in Motorlagern zur Anwendung gelangen, wird auch das dynamische Verhalten des Motorlagers zu einer Funktion der Temperatur. Dies gilt insbesondere für Hydrolager, bei denen die Dämpfungswirkung und die dynamische Steifigkeit im wesentlichen durch die Eigenschaften der eingesetzten Dämpferflüssigkeit, und hier wiederum insbesondere durch die Viskosität der Dämpferflüssigkeit, bestimmt werden, die wiederum eine starke Temperaturabhängigkeit zeigt. Auch das für die Herstellung der Tragfeder verwendete Gummi weist in Abhängigkeit von der jeweiligen Temperatur häufig eine Veränderung seiner elastischen Eigenschaften auf.

Zur Stabilisierung des thermischen Verhaltens von Motorlagern wird deshalb angestrebt, vergleichsweise temperaturstabile Tragfederwerkstoffe und Dämpferflüssigkeiten zu verwenden. Ausserdem werden als Schutz gegen die Strahlungswärme des Motors motorseitig angeordnete Strahlungsschilder verwendet.

Diese Massnahmen führen jedoch nur zu einer vergleichsweise geringen Reduktion der thermischen Belastung von Motorlagern.

Der Erfindung liegt deshalb die Aufgabe zugrunde, ein Motorlager der angegebenen Gattung zu schaffen, bei dem eine geringe Temperaturbelastung und damit eine höhere Temperaturstabilität erreicht wird.

Insbesondere soll ein Motorlager vorgeschlagen werden, dessen thermische Belastung wesentlich reduziert ist.

Dies wird erfindungsgemäss durch die im kennzeichnenden Teil des Anspruchs 1 angegebenen Merkmale erreicht.

Die mit de Erfindung erzielten Vorteile beruhen insbesondere darauf, dass durch die angegebenen Massnahmen die thermische Belastung des Motorlagers verringert und damit seine Temperaturstabilität verbessert wird. Dies wird mit vergleichsweise einfachen Massnahmen erreicht, die ohne weiteres bei handelsüblichen Kraftfahrzeugen eingesetzt werden könnte, da im Bereich der Motorlager ausreichend Platz für die Unterbringung der noch zu erörternden Wärmeschutzmassnahmen zur Verfügung steht.

Dabei wird unter zwei unterschiedlichen Aspekten vorgegangen, und zwar wird zunächst die das Motorlager beeinflussende Wärmemenge durch eine motorseitige Wärmedämmschicht verringert, die gleichzeitig auch als Zugsicherung dienen kann.

Ausserdem wird der Wärmeübergang zwischen dem Motortragteil, im allgemeinen dem Motortragarm, und der Karosserie verbessert, wobei gleichzeitig gewährleistet wird, dass sich die akustischen Eigenschaften des Lagers nicht verschlechtern. Zu diesem Zweck wird das Motorlager durch eine oder zwei nicht-tragende, aus Material mit hoher Wärmeleitfähigkeit bestehende Wärmebrücken überbrückt, wodurch die Wärme nicht durch das Motorlager sondern über die Wärmebrücken entlang in Richtung der Karosserie geleitet ist.

Diese Wärmebrücken sind entweder an den motorseitigen Teil des Motorlagers, beispielsweise einem zusätzlich verwendeten Strahlungsschild bzw. den Motortragarm direkt angeschlossen.

Zur Verbesserung des Transports der im Lager dissipierten Dämpfungsarbeit und der vom Motor an das Lager übertragenen Restwärme an die Karosserie sind ausserdem Wärmebrücken zwischen dem Hydrolagerkörper und der Karosserie vorgesehen.

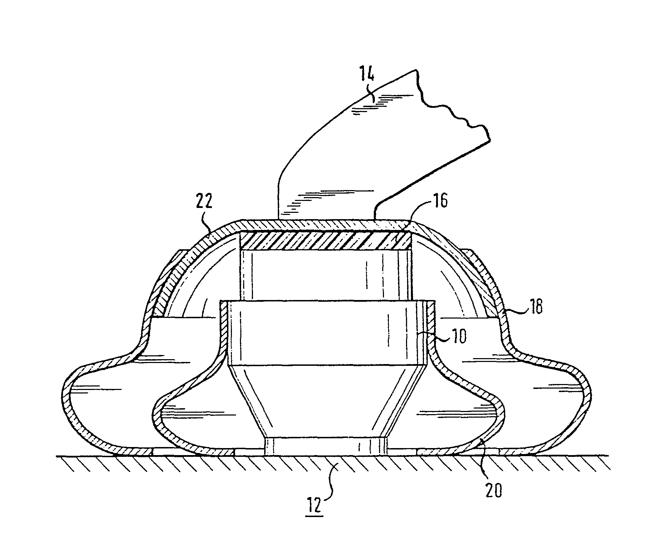

Die Erfindung wird im folgenden anhand eines Ausführungsbeispiels unter Bezugnahme auf die beiliegende, schematische Zeichnung näher erläutert, deren einzige Figur einen Schnitt durch ein Motorlager im eingebauten Zustand zeigt.

Das aus der Figur ersichtliche, allgemein durch das Bezugszeichen 10 angedeutete Hydrolager befindet sich zwischen einer Karosserie 12 und einem Motortragarm 14 eines Kraftfahrzeugs. Auf der dem Motortragarm 14 zugewandten Seite ist das Hydrolager 10 mit einer Wärmedämmschicht 16 versehen, die aus einem keramischen Werkstoff oder einem wärmeisolierenden Kunststoff besteht.

Auf dieser Wärmedämmschicht 16 ist ein Strahlungsschild 22 als Schutz gegen die Strahlungswärme des Kraftfahrzeugmotors (nicht dargestellt) befestigt; der Strahlungsschild 22 ist wiederum mit dem Motortragarm 14 verbunden. Zur Verbesserung des Wärmeübertragungsvorganges zwischen dem Motortragarm 14 und der Karosserie 12 bzw. dem Hydrolagerkörper 10 und der Karosserie 12 bzw. dem Hydrolagerkörper 10 und der Karosserie, und zwar ohne Verschlechterung der akustischen Eigenschaften, sind die das Hydrolager 10 umgebende Wärmebrücken 18, 20 vorgesehen.

Diese Wärmebrücken 18, 20 sind nicht-tragend ausgebildet und einerseits zwischen der Karosserie und dem Hydrolager 10 sowie andererseits zwischen der Karosserie und dem Strahlungsschild 22 angeordnet und bestehen aus Werkstoffen mit hoher Wärmeleitfähigkeit, insbesondere Metallen. Gute Ergebnisse werden mit Wärmebrücken 18, 20 aus Kupfer, Stahl oder Messing erreicht, wobei die entsprechenden Werkstoffe in Bandform zur Anwendung gelangen. Die Wärmebrücken haben dementsprechend eine verschwindend geringe Biegesteifigkeit.

Während die Wärmebrücke 20 die auf das Hydrolager 10 übertragene oder die im Hydrolager 10 entstehende Wärme zur Karosserie 12 hin ableitete, leitet die Wärmebrücke 18 die Wärme des Strahlungsschildes 22 ab, wodurch sich insgesamt eine Verringerung der Betriebstemperatur des Hydrolagers 10 ergibt.

## Patentansprüche

1. Zwischen einem Motortragteil (14) und einer Karosserie (12) eines Kraftfahrzeuges angebrachtes Motorlager (10), insbesondere Hydrolager, bei dem eine erste Wärmebrücke (20) das Motorlager (10) mit der Karosserie (12) und/oder eine zweite Wärmebrücke (18) das motorseitige Teil des Motorlagers (10) mit der Karosserie (12) verbindet, dadurch gekennzeichnet, dass zwischen dem Motorlager (10) und dem Motortragteil (14) eine Wärmedämmschicht (16) angeordnet ist, dass die Wärmebrücken (18, 20) aus Metallen mit hoher Wärmeleitfähigkeit bestehen und dass die Wärme nicht durch das Motorlager (10) sondern über die Wärmebrücken (18, 20) entlanggeleitet ist.

2. Motorlager nach Anspruch 1, dadurch gekennzeichnet, dass die Wärmedämmschicht aus einem keramischen Werkstoff oder einem anderen wärmedämmenden Werkstoff besteht.

3. Motorlager nach Anspruch 1 oder 2, dadurch gekennzeichnet, dass die Wärmebrücken (18, 20) aus Kupfer, Stahl oder Messing bestehen.

4. Motorlager nach einem der Ansprüche 1 bis 3, dadurch gekennzeichnet, dass die nicht-tragenden, gebogenen Wärmebrücken (18, 20) auf der Oberfläche der Karosserie (12) aufliegen.

5. Motorlager nach einem der Ansprüche 1 bis 4, dadurch gekennzeichnet, dass zwischen dem Tragteil (14) und der Wärmedämmschicht (16) ein Strahlungsschild (22) angeordnet ist, und dass die zweite Wärmebrücke (18) mit dem Strahlungsschild verbunden ist.

## Claims

1. An engine mounting (10) attached between an engine-supporting part (14) and a body (12) of a motor vehicle, especially a hydraulic mounting, in which a first thermal bridge (20) connects the engine mounting (10) to the body (12) and/or a second thermal bridge (18) connects that part of the engine mounting (10) which is on the engine side to the body (12), characterized in that a thermal insulation layer (16) is arranged between th engine mounting (10) and the engine-supporting part (14), in that the thermal bridges (18, 20) are composed of metals of high thermal conductivity and in that the heat is not conducted through the engine mounting (10) but via the thermal bridges (18, 20).

2. An engine mounting according to claim 1, characterized in that the thermal insulation layer is composed of a ceramic material or another thermally insulating material.

3. An engine mounting according to claim 1 or 2, characterized in that the thermal bridges (18, 20) are composed of copper, steel or brass.

4. An engine mounting according to any one of claims 1 to 3, characterized in that the non-load bearing, bent thermal bridges (18, 20) rest on the surface of the body (12).

5. An engine mounting according to any one of claims 1 to 4, characterized in that a heat shield (22) is arranged between the supporting part (14) and the thermal insulation layer (16) and in that the second thermal bridge (18) is connected to the heat shield (22).

## Revendication

1. Palier de moteur (10) et, en particulier, palier hydraulique monté entre und support de moteur (14) et une carrosserie (12) d'un vehicule automobile, dans lequel un premier pont thermique (20) relie le palier de moteur (10) à la carrosserie (12) et/ou un second pont thermique (18) relie la partie du palier de moteur (10) du côté du moteur à la carrosserie (12), caractérisé en ce qu'une couche d'isolant thermique (16) est disposée entre le palier de moteur (10) et le support de moteur (14), en ce que les ponts thermiques (18, 20) sont réalisés en métaux à conductivité thermique élevée et en ce que la chaleur n'est pas éliminée à travers la palier de moteur (10) mais bien par les pont thermiques (18, 20).

2. Palier de moteur selon la revendication 1, caractérisé en ce que la couche d'isolant thermique est constituée d'un matériau céramique ou d'un autre matériau thermiquement isolant.

3. Palier de moteur selon la revendication 1 ou 2, caractérisé en ce que les ponts thermiques (18, 20) sont réalisés en cuivre, acier ou laiton.

4. Palier de moteur selon l'une des revendications 1 à 3, caractérisé en ce que les ponts thermiques (18, 20) non portants et cintrés prennent appui sur la surface de la carrosserie (12).

5. Palier de moteur selon l'une des revendications 1 à 4, caractérisé en ce qu'un écran contre la rayonnement (22) est disposé entre la pièce de support (14) et la couche d'isolant thermique (16) et en ce que le second pont thermique (18) est relié à l'écran contre le rayonnement (22).